# DEMANDE DE BREVET EUROPEEN

(11) **EP 1 978 728 A1**
(43) Date de publication de la demande: **08.10.2008**
(21) Numéro de dépôt: 08290284.2
(22) Date de dépôt: 27.03.2008
(51) Int. Cl.: H04N 5/00, H04N 5/44, H04N 5/775, H04L 29/08

(54) **Dispositif pour connecter un appareil électronique portable à au moins un autre appareil électronique utilisant un tel dispositif**

(30) Priorité: 06.04.2007 FR 0702516
(71) Demandeur: Archos, 91430 Igny (FR)
(72) Inventeur: Crohas, Henri, 91370 Verrières Le Buisson (FR)

(57) **Abrégé**

La présente invention concerne un dispositif pour connecter un appareil électronique portable multimédia, capable de stocker et de lire et/ou d'enregistrer de la vidéo sous forme numérique, à au moins un autre appareil électronique. Le dispositif comprend en outre au moins une interface de communication sans fil et des moyens pour mettre oeuvre au moins une fonction impliquant tout ou partie des ressources matérielles et/ou programmatiques embarquées ou attachés au dispositif.

## Description

La présente invention concerne un dispositif pour connecter un appareil électronique portable à au moins un autre appareil électronique, cet appareil électronique portable étant au moins capable de stocker des contenus numériques et de lire et/ou d'enregistrer de la vidéo. L'invention concerne également un système utilisant un tel dispositif pour diffuser des flux numériques représentant des programmes de télévision et/ou des contenus multimédia vers un ou plusieurs appareils capables de les exploiter au sein d'un local ou d'un moyen de transport.

On connaît l'existence de boîtiers des raccordements ADSL offrant de manière native ou optionnelle une fonction de point d'accès Wifi pour des équipements externes. On connaît en outre des stations d'accueil pour des appareils portables sans fil permettant des connexions filaires. On connaît en outre les brevets numéro FR0308516 et FR0407172 du même inventeur.

La présente invention a pour but un nouveau moyen pour connecter un objet électronique portable à son environnement, notamment à d'autres appareils électroniques complémentaires en utilisation sensiblement sédentaire. On entend par utilisation sensiblement sédentaire une utilisation de l'appareil électronique portable en un point fixe ou en mobilité autour de ce point fixe dans un bâtiment ou un moyen de transport. Le bâtiment peut être par exemple un lieu d'habitation ou un local professionnel. Le moyen de transport peut être par exemple un train, un bus, une voiture, un avion ou un bateau. L'invention a aussi pour but la fourniture d'une capacité de communication sans fil capable d'offrir une qualité de service en rapport avec une utilisation pour consommer de la télévision ou des contenus numériques représentant de la vidéo, de la musique ou des photos dans les meilleures conditions possibles. Il s'agit en particulier d'offrir un débit de données suffisant pour satisfaire les besoins d'applications fortement consommatrices de bande passante comme par exemple la diffusion et/ou les transferts de contenus vidéo notamment en haute définition.

Les solutions à l'état de l'art n'apportent qu'une réponse partielle et insatisfaisante au problème en ce que les fonctions de connectivité filaires et/ou non filaires ne sont pas optimisées pour apporter la qualité de service attendue sur le lieu de consommation et/ou que les combinaisons fonctionnelles à l'état de l'art ne permettent pas la fournitures de la plupart des services que permet la mise en oeuvre de l'invention dans des conditions acceptables d'ergonomie, d'encombrement et/ou de coût.

L'invention vise notamment à rendre possible l'obtention d'une liaison sans fil entre au moins un équipement portable et le dispositif selon l'invention, cette liaison sans fil étant agencée et optimisée pour offrir une bonne qualité de service dans le cadre d'une utilisation de longue durée. On entend par bonne qualité de service une quasi absence d'artefacts perceptibles par l'utilisateur. On entend par utilisation de longue durée, une utilisation continue d'au moins plusieurs heures correspondant par exemple à la consommation d'une ou plusieurs oeuvres vidéo ou musicales.

On atteint au moins l'un des buts précités avec un dispositif connectable à un appareil électronique portable comme par exemple, un lecteur multimédia portable « Portable Media Player » ou « Portable Media Assistant » en langue anglaise, un conteneur multimédia portable, c'est-à-dire un appareil pour stocker des contenus multimédia et les restituer par le biais d'un appareil externe standard ou encore un téléphone portable comprenant des moyens de connexion à un réseau local sans fil tel que par exemple Wifi ou Bluetooth en plus de sa capacité à se connecter à au moins un réseau d'infrastructure. Des appareils électroniques portables du type assistants personnels numériques, « Personal Digital Assitant » en langue anglaise, ou bien entendu des ordinateurs portables peuvent aussi être connectés au dispositif selon l'invention. De manière générale le dispositif selon l'invention peut être utilisé avantageusement avec tout appareil numérique portable nécessitant un apport d'énergie pour son propre fonctionnement et/ou pour recharger des moyens de stockage d'énergie internes. Les appareils portables qui entrent particulièrement dans le champ de l'invention sont au moins capables de stocker des contenus numériques dans une mémoire d'au moins 1 gigaoctet et de lire et/ou d'enregistrer de la vidéo. L'appareil portable pourra en outre avantageusement lire et/ou enregistrer de la musique et/ou stocker des photos sous forme numérique et les restituer. L'appareil portable comprendra avantageusement une interface de communication sans fil. Le dispositif selon l'invention comprend en outre des moyens de transmissions sans fil qui sont à la base de nouveaux services et de nouveaux usages en particulier pour consommer de la télévision. Il s'agit en particulier, par le biais du dispositif selon l'invention, de diffuser des flux d'information multimédia vers des terminaux mobiles et des appareils fixes tels que d'autres téléviseurs dans un lieu d'habitation, dans un local professionnel ou un moyen de transport.
Dans son aspect système pour diffuser des flux numériques représentant des programmes de télévision et/ou des contenus multimédia, l'invention peut concerner également des appareils électroniques portables n'ayant pas de capacité de stockage particulière en dehors de celle qui est nécessaire pour recevoir et restituer convenablement un flux numérique diffusé en « streaming ». On reste également dans le cadre de l'invention en utilisant des téléviseurs non portables qui incluent des moyens pour recevoir par des techniques sans fil, pour décoder et pour restituer des flux numériques représentant des programmes de télévision et/ou des contenus multimédia.

Suivant l'invention, le dispositif pour connecter un appareil électronique portable, capable de stocker des contenus numériques dans une mémoire d'au moins 1 gigaoctet et de lire et/ou d'enregistrer de la vidéo, à au moins un autre appareil électronique, comporte :
- une interface pour établir la continuité d'au moins un signal entre ledit dispositif et l'appareil électronique portable et/ou pour transférer de l'énergie à l'appareil électronique portable, et
- au moins une interface pour établir la continuité d'au moins un signal entre ledit dispositif et l'au moins un autre appareil électronique, et
- au moins une interface de communication sans fil, et
- des moyens 6 pour mettre en oeuvre, au moins une fonction impliquant tout ou partie des ressources matérielles et/ou programmatiques mises en oeuvre dans ledit dispositif.

Une interface pour transférer de l'énergie à l'appareil électronique portable repose sur la continuité d'au moins un circuit électrique par l'intermédiaire de moyens désolidarisables. On entend par continuité d'au moins un circuit électrique au moins un moyen permettant la circulation d'un courant. Il peut s'agir par exemple de la continuité d'au moins deux conducteurs électriques isolés l'un de l'autre ou encore éventuellement de la continuité d'un seul conducteur électrique proprement dit, la circulation du courant pouvant se faire par un contact avec une partie métallique de l'appareil portable, par exemple un élément de son boîtier.

Une autre interface pour transférer de l'énergie à l'appareil électronique portable utilise un couplage inductif. Il peut être particulièrement avantageux de transférer l'énergie par l'intermédiaire d'inducteurs en vis-à-vis à travers des parois en contact de l'appareil portable et du dispositif. L'absence de mise en oeuvre de contacts électriques de cette solution améliore la fiabilité, la sécurité et permet de réaliser des boîtiers sensiblement étanches.

Une interface pour établir la continuité d'au moins un signal entre ledit dispositif et l'appareil électronique portable repose sur la continuité d'au moins un circuit électrique par l'intermédiaire de moyens désolidarisables. Les appareils portables possèdent généralement des moyens d'affichage, de restitution sonore et/ou des interfaces homme-machine telles qu'un clavier ou un écran tactile autonomes. Cela étant, les moyens embarqués ne peuvent généralement pas rivaliser en qualité et/ou en confort d'utilisation avec des moyens plus encombrants et/ou plus spécifiques. Le dispositif selon l'invention comprend au moins une interface pour acheminer les signaux concernés vers des appareils externes. Lesdits appareils externes peuvent être par exemple un téléviseur, un vidéo projecteur, une chaine hifi, un ensemble de restitution de son à canaux multiples du type « home cinéma », un clavier etc.
L'interface désolidarisable la plus simple est constituée d'au moins un couple de connecteurs comprenant au moins un contact électrique pour acheminer au moins un signal. Dans le cas d'un seul contact, la continuité du potentiel de référence peut être assurée par des moyens communs avec ceux utilisés pour transférer de l'énergie et/ou par un contact avec une partie métallique du boîtier.
Dans une variante visant particulièrement à limiter le nombre de contacts électriques, une interface pour établir la continuité d'au moins un signal entre ledit dispositif et l'appareil électronique portable peut être confondue avec une interface pour transférer de l'énergie à l'appareil électronique portable. Plusieurs combinaisons de ressources sont possibles. Dans le cas ou l'appareil électronique portable ne comprend pas de moyens de communication sans fil compatible avec l'au moins une interface de communication sans fil du dispositif telle qu'introduite en page 3, des solutions dites à courants porteurs peuvent êtres mises en oeuvre. Il s'agit de superposer à la tension d'alimentation, qui peut être continue ou alternative à basse fréquence par exemple à 50, 60, 100 ,120 ou 400Hz, une fréquence porteuse par exemple dans la gamme des 100KHz ou une pluralité de fréquences porteuses dans le cas de l'utilisation de modulations dites à spectre étalé, la ou les fréquences porteuses étant modulées en fonction de l'information à transmettre. La technique des courants porteurs est généralement utilisée à des tensions plus élevées mais rien ne s'oppose à une utilisation dans le cadre de très basses tensions. Elle permet d'utiliser les mêmes moyens physiques à la fois pour transférer de l'énergie et pour transmettre des données éventuellement multiplexées permettant d'établir la continuité d'au moins un signal et si nécessaire par une liaison bidirectionnelle il est possible d'assurer la continuité d'au moins un signal en entrée et/ou au moins un signal en sortie.
Dans le cas où l'appareil portable est équipé d'une interface de communication sans fil compatible avec celle du dispositif, alors il est possible d'utiliser cette interface pour assurer la continuité d'au moins un signal.

Bien entendu il est avantageux d'offrir la continuité d'une pluralité de signaux, par exemple des signaux d'entrée et/ou de sortie analogique, des signaux d'entrée et/ou de sortie numérique, des signaux d'entrée et/ou de sortie de commande permettant ainsi une coopération fonctionnelle riche entre l'appareil portable et le dispositif selon l'invention.

Une autre variante d'interface pour établir la continuité d'au moins un signal entre ledit dispositif et l'appareil électronique portable repose sur la continuité d'au moins un circuit optique par l'intermédiaire de moyens désolidarisables. Il est avantageux d'utiliser des moyens optiques pour assurer la continuité des signaux en ce que cela permet d'augmenter les performances et/ou de renforcer la robustesse et l'immunité des équipements vis-à-vis des perturbations électriques. Ces moyens peuvent être par exemple basés sur l'emploi de fibres optiques en plastique avec éventuellement une bille d'adaptation dans l'interface désolidarisable pour augmenter la tolérance vis-à-vis d'erreur d'alignement des fibres de part et d'autre de l'interface. Des moyens optiques rayonnés peuvent également être utilisés sans sortir du cadre de l'invention, par exemple des « tranceiver » IrDA ou des solutions propriétaires basées sur l'utilisation d'émetteurs et/ou de récepteurs optoélectroniques dont le rayonnement peut être guidé et/ou délimité par des cloisonnements appropriés de part et d'autre de l'interface désolidarisable. Des solutions de multiplexage peuvent permettre de réduire le nombre de canaux optiques, à si possible un dans chaque direction, en exploitant les capacités de transmission à très haut débit propres aux solutions optiques.

Une interface pour établir la continuité d'au moins un signal entre le dispositif selon l'invention et l'appareil électronique portable utilise un couplage inductif. Le couplage inductif est particulièrement avantageux en ce que comme les solutions optiques, il est sans contact électrique direct entre les inducteurs situés en vis-à-vis derrière des parois isolantes. Cette caractéristique évite en outre de nombreux problèmes potentiels notamment la circulations de courants parasites ou le stockage de charges électriques pouvant perturber le fonctionnement de circuits électroniques qui deviennent de plus en plus sensibles à l'environnement par leur fonctionnement à des tensions de plus en plus basses qui vont de paire avec l'augmentation de la densité d'intégration et la recherche de l'abaissement des consommations énergétiques.
L'intérêt de la solution de transmission par couplage inductif est encore renforcé si une interface pour établir la continuité d'au moins un signal entre ledit dispositif et l'appareil électronique portable utilise les mêmes inducteurs que pour transférer de l'énergie. Le partage des mêmes inducteurs pour transférer de l'énergie et des données est avantageux en ce qu'il combine des avantages tout en économisant des moyens. Le partage des mêmes inducteurs entre les deux usages peut par exemple reposer sur la modulation du courant induit et/ou du courant absorbé pour envoyer des données selon qu'on se trouve du côté de l'alimentation ou de la charge. La réception de données peut se faire par exemple en démodulant le signal porteur prélevé sur l'inducteur correspondant.

Une interface pour établir la continuité d'au moins un signal entre le dispositif selon l'invention et l'appareil électronique portable utilise un couplage capacitif. Le couplage capacitif est avantageux en ce qu'il peut offrir sensiblement les mêmes performances que des solutions optiques avec un coût de mise en oeuvre pouvant être inférieur. Des électrodes de forme, de surface et en nombre appropriés, disposées en vis-à-vis derrière des parois isolantes, permettent le transfert d'information par couplage capacitif. Les moyens mis en oeuvre pour matérialiser cette interface sont dimensionnés pour offrir une liaison, qui est avantageusement bidirectionnelle, et qui offre des débits en rapport notamment avec les choix fonctionnels réalisés dans le cadre de la mise en oeuvre de l'invention.

Une interface pour établir la continuité d'au moins un signal entre ledit dispositif et l'appareil électronique portable utilise une ou plusieurs liaisons radioélectriques à micro puissance. Il s'agit d'une application des techniques de transmission de données par radio appliquée au cas d'une interface où les antennes du ou des émetteurs sont très proches de celles du ou des récepteurs correspondants. Les types d'antennes et leurs orientations respectives, sont choisis pour maximiser l'efficacité du canal ou des canaux de transmission notamment en maximisant les isolations mutuelles des antennes pour réduire les interférences. Tout ou partie des caractéristiques des antennes peuvent être différentes en émission et en réception sans sortir du cadre de l'invention. Des blindages appropriés seront avantageusement disposés dans le dispositif et dans l'appareil portable pour tendre vers l'enfermement de l'interface dans une cage de Faraday pour limiter les rayonnements vers l'extérieur et renforcer son immunité vis-à-vis des sources de perturbations dont fait partie l'interface de communication sans fil du dispositif. Si nécessaire, des cloisonnements internes au blindage permettent de matérialiser plusieurs canaux de transmission indépendants au sein de l'interface. L'intégration de l'électronique de traitement du signal et d'une ou plusieurs antennes sur une même puce à placer de part et d'autre de l'interface est particulièrement avantageuse en matière d'encombrement, de facilité de mise en oeuvre et de coût.

Le dispositif selon l'invention et l'appareil électronique portable embarquent chacun une partie des moyens constitutifs de l'interface 3. L'ensemble est agencé pour que l'interface fonctionne dans des conditions optimales lorsque les deux produits sont dans une position relative particulière de l'un par rapport à l'autre déterminée par construction. Cette position dite relative particulière est rendue stable par l'effet de la gravité et au moins trois points de contact entre l'appareil portable et le bâti du dispositif ou une pièce d'adaptation solidaire du bâti. L'effet de la gravité peut également être aidé ou remplacé par l'effet d'un champ magnétique permanent produit par un ou plusieurs aimants ou encore par tout autre moyen mécanique sans sortir du cadre de l'invention. L'utilisation d'aimants pour le maintien de l'appareil portable sur le dispositif convient particulièrement aux solutions de stockage de contenus numériques ne reposant pas sur l'utilisation des champs magnétiques comme par exemple les solutions à base de mémoires flash.

Le maintien en position stable de l'appareil portable sur le dispositif peut nécessiter le blocage d'un ou de plusieurs degrés de liberté par des guidages appropriés. Ceci est particulièrement nécessaire dans le cas des interfaces sans contact électrique. Une forme femelle, partie intégrante du bâti du dispositif ou encore matérialisée par une pièce d'adaptation solidaire du bâti du dispositif et enchâssant au moins une partie du boîtier de l'appareil portable reçoit l'appareil portable en le guidant jusqu'à sa position de maintient stable. Le guidage et le blocage de degrés de libertés non souhaités peut aussi reposer sur une forme mâle solidaire du bâti du dispositif qui rentre au moins en partie dans le volume du boîtier de l'appareil portable. On ne sort pas du cadre de l'invention si par construction plusieurs positions relatives particulières sont possibles, par exemple plusieurs inclinaisons pour ajuster l'angle de vision de l'utilisateur pour regarder l'image sur l'écran de l'appareil portable posé sur le dispositif. De même il est possible d'agencer l'interface mécanique et électrique entre l'appareil portable et le dispositif selon l'invention pour offrir une position stable de type « portrait » et une position stable de type « paysage » par analogie avec les formats d'impression.
Dans ce cas un raffinement de mise en oeuvre avantageux exploite la détection de l'interface active ou l'information d'un capteur de position dans l'appareil portable pour faire pivoter l'image affichée de manière à la présenter toujours de manière appropriée.

Une interface pour établir la continuité d'au moins un signal entre le dispositif selon l'invention et l'au moins un autre appareil électronique repose sur la continuité d'au moins un circuit électrique par l'intermédiaire de moyens désolidarisables. Le dispositif peut établir la continuité d'au moins un signal entre ses circuits internes et un autre appareil électronique au moyen d'au moins un connecteur solidaire d'une paroi du dispositif. L'au moins un connecteur vers un appareil externe peut aussi être placé à l'extrémité d'un câble sans sortir du cadre de l'invention. Il est à noter que dans une version minimale de mise en oeuvre du dispositif selon l'invention, un bloc d'alimentation externe raccordable au dispositif par au moins un connecteur déconnectable, placé à l'extrémité d'un câble et/ou attaché à une paroi d'un des deux appareils, peut être considéré comme un autre appareil électronique dont au moins un circuit électrique est en continuité avec les circuits internes du dispositif par l'intermédiaire de moyens désolidarisables.

Une interface pour établir la continuité d'au moins un signal entre le dispositif selon l'invention et l'au moins un autre appareil électronique repose sur la continuité d'au moins une liaison optique en mode guidé par au moins un circuit optique raccordé par l'intermédiaire de moyens désolidarisables et/ou en mode rayonné. La continuité de l'au moins un signal entre le dispositif et l'au moins autre appareil électronique peut reposer sur au moins une liaison optique guidée et/ou rayonnée. On entend par liaison optique une liaison unidirectionnelle, bidirectionnelle, éventuellement multiplexée en fréquence et/ou dans le domaine temporel qui utilise au moins une modulation d'un signal lumineux d'au moins une longueur d'onde par exemple dans la gamme du proche infrarouge, du rouge visible ou du bleu. On entend par liaison optique guidée une liaison ou la lumière est transmise par des moyens qui guident son parcours et/ou en limitent le rayonnement. Il peut s'agir par exemple de câbles comprenant au moins une fibre optique dont le coeur est un milieu transparent pour la ou les longueurs d'onde utilisées et qui est fait de verre ou d'une matière plastique appropriée. Il peut s'agir également de moyens prévus pour être utilisés en mode rayonné mais qui sont agencés pour que leur diagramme de rayonnement soit limité dans l'espace pour par exemple éviter des interférences en émission et/ou en réception et/ou pour pouvoir mettre en oeuvres plusieurs liaisons indépendantes dans un espace de taille réduite. Il peut s'agir par exemple de cloisonnements agencés sur le trajet du signal, solidaires de l'une et/ou l'autre des extrémités de la liaison permettant en outre un positionnement des moyens d'émission et de réception en vis-à-vis tout en restant désolidarisables.
Il peut aussi s'agir de liaisons optiques à partir de signaux lumineux transmis en mode rayonné en vue directe ou par réflexion sur des parois. Il peut s'agir de liaisons bidirectionnelles telles que par exemple selon le standard IrDA ou de liaison unidirectionnelles notamment pour la réception de signaux infrarouge issus d'une télécommande et/ou de l'émission de signaux infrarouge destinés à la commande d'autres appareils électroniques.

Les moyens désolidarisables étant en partie attachés d'une manière sensiblement rigide à une paroi du dispositif. Il peut s'agir par exemple de toute combinaison de connecteurs male, femelle ou hermaphrodites dont chaque partie est attachée de manière sensiblement rigide à une paroi de l'appareil correspondant, les appareils pouvant être désolidarisés. Bien entendu on ne sort pas de l'invention dans le cas d'une pluralité de connecteurs agencés pour être connectés sensiblement dans un même mouvement, par exemple si tout ou partie de ces connecteurs sont fixés sur des supports flexibles destinés à absorber des tolérances dimensionnelles.

Les moyens désolidarisables étant en partie attachés par des moyens souples, éventuellement détachables, au dispositif. Il peut s'agir par exemple de connecteurs dont au moins l'une des parties est montée à l'extrémité d'un câble.

L'au moins une interface de communication sans fil repose sur la modulation d'au moins un champ électromagnétique pour créer une liaison unidirectionnelle, bidirectionnelle, éventuellement multiplexée en fréquence et/ou dans le domaine temporel.
La mise en oeuvre préférée du dispositif selon l'invention utilise au moins une liaison radio en tant que moyen de communication sans fil. Il peut s'agir d'un émetteur, d'un récepteur ou avantageusement d'un émetteur-récepteur fonctionnant en duplex intégral ou à l'alternat. Une liaison numérique bidirectionnelle à haut débit et si possible conforme à un standard de l'industrie largement répandu sera préférée. L'invention visant particulièrement la fourniture de services nécessitant la mise en oeuvre d'au moins une liaison sans fil performante, on fera appel si possible avantageusement aux techniques de diversité en réception et/ou en émission en utilisant par exemple une variante de Wifi telle que 802.11n.
Il est toutefois possible sans sortir du cadre de l'invention de mettre en oeuvre une solution analogique unidirectionnelle pour par exemple transmettre un signal vidéo incluant la transmission du son vers au moins un autre téléviseur au sein d'un même local. L'ajout d'un moyen de réception agencé pour recevoir des signaux de télécommande retransmis par ondes radio est particulièrement avantageux. En effet, il devient ainsi possible de transmettre des commandes au dispositif selon l'invention qu'il peut interpréter ou transmettre localement à l'appareil portable. Le dispositif selon l'invention ou l'appareil portable par l'intermédiaire du dispositif pouvant le cas échéant envoyer des commandes à d'autres appareils. L'ensemble de ses commandes directes et induites résultant d'actions sur une télécommande infrarouge située dans une autre pièce que le dispositif selon l'invention. L'adaptateur qui reçoit des signaux issus du dispositif pour les restituer à un autre téléviseur par exemple, inclut ou se voit attaché avantageusement un récepteur de télécommande à infrarouges dont la sortie pilote directement ou indirectement un émetteur radio pour transmettre l'information vers le dispositif, à travers les cloisons du bâtiment.

Bien entendu on ne sort pas du cadre de l'invention si l'au moins une interface de communication sans fil repose sur la modulation d'un signal infrarouge.

L'au moins une fonction peut être une mise en continuité directe ou indirecte d'au moins un circuit électrique de l'appareil électronique portable avec un circuit électrique de l'au moins un autre appareil électronique. La fonction minimale du dispositif selon l'invention est une mise en relation de signaux d'entrée-sortie de l'appareil électronique portable avec des entrées-sorties d'au moins un autre appareil électronique. Cette mise en relation peut être directe en ne mettant en oeuvre que de la connectique et du câblage filaire ou imprimé. Cette fonction de base offre l'avantage de pouvoir connecter et déconnecter sensiblement en un seul mouvement une pluralité de connections impliquant généralement de nombreux câbles dont en outre la qualité des connecteurs qui les équipent n'est pas prévue pour un nombre de cycles de connexion/déconnexion élevé. La mise en relation peut aussi mettre en oeuvre des circuits actifs au sein du dispositif. Il peut s'agir d'amplificateurs tampons, d'adaptateurs d'impédance et/ou de niveaux, de convertisseurs numérique-analogique et/ou analogique-numérique, d'adaptateurs de protocole et/ou d'interface.

L'au moins une fonction peut être une mise en continuité directe ou indirecte d'au moins un circuit électrique de l'appareil électronique portable avec l'au moins une interface de communication sans fil. Il s'agit d'utiliser une interface de communication sans fil du dispositif pour en faire bénéficier directement l'appareil portable. Il peut s'agir d'apporter une interface sans fil à un appareil portable qui n'en est pas pourvu pour par exemple se connecter à un réseau sans fil local et/ou distant par exemple Wifi. Il peut s'agir également d'apporter une connectivité selon un standard de communication sans fil autre que celui qu'embarque l'appareil portable, une variante différente de Wifi par exemple. Il peut s'agir aussi de recevoir un flux vidéo et/ou audio venant par exemple d'un serveur local externe, d'un ordinateur, d'un enregistreur numérique etc.

L'au moins une fonction étant une mise en continuité directe ou indirecte d'au moins un circuit électrique de l'au moins un autre appareil électronique avec l'au moins une interface de communication sans fil. Il s'agit de mettre les ressources du dispositif selon l'invention en matière de communication sans fil à disposition de l'au moins un autre appareil. Ceci peut se faire par continuité de circuits électriques et/ou en mettant en oeuvre des circuits d'adaptation pouvant impliquer des circuits actifs pour convertir des niveaux, des interfaces, des protocoles ou des applications pour offrir la fonctionnalité attendue à partir des ressources disponibles.

L'au moins une fonction peut être la mise en continuité directe ou indirecte d'au moins une entrée avec une sortie sensiblement de même nature dans des conditions déterminées. Il s'agit d'offrir par exemple une fonction « pass through » par exemple pour faire en sorte que des entrées de signaux soient dirigées vers les sorties sensiblement de même nature et/ou que des sorties de signaux soient dirigées vers des entrées de même nature dans des conditions déterminées. Ces conditions peuvent être par exemple en relation avec la présence ou l'absence de l'appareil portable. Ou encore en relation avec une connexion active ou non, dans le cas d'une possibilité de connexion sans fil entre l'appareil portable et le dispositif selon l'invention. Que ce soit dans le cas de la connexion-déconnexion physique ou logique, par moyens de communication sans fil interposés, de l'appareil portable d'avec le dispositif, la redirection de tout ou partie des entrées-sortie peut être en relation avec le choix d'une fonction de lecture ou d'enregistrement.
On entend par entrées et/ou des sorties sensiblement de même nature des entrées et/ou des sorties fonctionnellement équivalentes mais conformes à des standards différents pouvant impliquer les connecteurs, les caractéristiques électriques et/ou des protocoles de communication et/ou des moyens de cryptage le cas échéant. A titre d'exemples non-limitatifs: entrée et/ou sortie vidéo composite, S-VHS, dite en composantes séparées, DVI pour l'image. Ou encore entrée et/ou sortie ligne analogique, S/PDIF pour le son, SCART/péritel ou HDMI pour l'image et le son combinés.

L'au moins une fonction peut être un point d'accès dans un réseau de communication sans fil. Il s'agit de faire du dispositif un point d'accès dans un réseau connecté à des ressources locales ou distantes. Par exemple il peut s'agir d'un point d'accès wifi ou d'un point d'accès dans tout autre standard de réseau local sans fil.

L'au moins une fonction peut être une passerelle entre ledit réseau de communication sans fil et un réseau local utilisant des moyens filaires. La fonction passerelle assure la continuité du réseau local en assurant un changement de support physique et le cas échéant assure certaines adaptations de tout ou partie des protocoles de communication comme par exemple les plans d'adressage ou les conditions d'acquittement et/ou de répétition. Il peut s'agir également d'une fonction passerelle entre un réseau local sans fil par exemple wifi et une simple liaison point à point filaire entre le dispositif selon l'invention, par exemple conforme au standard Ethernet, avec toute ressource locale équipée d'une interface compatible telle qu'un ordinateur.

L'au moins une fonction étant une passerelle entre ledit réseau de communication sans fil et un réseau d'infrastructure utilisant des moyens filaires. Il s'agit d'une variante de la fonction passerelle qui assure la continuité fonctionnelle entre un réseau local sans fil par exemple Wifi et un réseau d'infrastructure par exemple par un accès ADSL, par fibre optique ou par câble à Internet. La liaison entre le réseau local sans fil par exemple selon le standard 802.11g dont un point d'accès est situé dans le dispositif selon l'invention et l'interface d'accès à un réseau d'infrastructure basé sur des moyens filaires peut être assuré par d'autres moyens filaires tel que par exemple une liaison Ethernet en point à point ou par l'intermédiaire d'un concentrateur et/ou d'un routeur ou une autre liaison utilisant des moyens sans fil, par exemple un standard compatible ayant un débit supérieur ou égal à celui mis en oeuvre dans le dispositif par exemple selon le standard 802.11n.

L'au moins une fonction peut être une passerelle entre ledit réseau de communication sans fil et un réseau d'infrastructure utilisant d'autres moyens sans fil. Cette variante concerne le cas où la connexion au réseau d'infrastructure utilise d'autres moyens sans fils par exemple Wimax, iBurst, HSDPA. L'interface sans fil avec le réseau d'infrastructure peut être déportée par des moyens filaires ou avantageusement embarquée dans le dispositif selon l'invention. Le dispositif devient alors le point d'entrée dans le réseau d'infrastructure et le moyen d'accéder aux services associés à ce réseau pour les éventuels autres appareils électroniques raccordés qui sont concernés et/ou pour le ou les appareils électroniques portables associés au dispositif.

L'au moins une fonction étant un répéteur pour étendre la portée d'un autre réseau de communication sans fil. Cette variante fonctionnelle de passerelle vise à étendre la portée d'un réseau local sans fil et/ou améliorer la qualité de service. Il est par exemple possible d'exploiter la pluralité de canaux généralement associés à un standard de communication sans fil pour réémettre sur un ou plusieurs autres canaux les informations reçues sur un ou plusieurs autres. Ainsi des informations provenant d'un émetteur distant et reçus aux limites de la sensibilité du récepteur local peuvent être réémis à la puissance nominale pour étendre la zone de diffusion. En outre la qualité de service associée à une communication sans fil est en partie liée à la puissance du signal reçu. Un haut niveau de qualité de service est essentiel dans les cas d'applications grandes consommatrices de bande passante en quasi continu pendant la durée d'utilisation du service comme la téléphonie, la visiophonie, le « streaming » de contenus audio et plus encore le « streaming » de contenu vidéo. Cette fonction peut contribuer efficacement à l'obtention d'un niveau élevé de qualité.

L'au moins une fonction étant une conversion d'un premier flux de données reçu provenant d'une source de contenu externe en au moins un second flux de données destiné spécifiquement à un appareil électronique portable préalablement associé au dispositif selon l'invention. La fonction de conversion est particulièrement avantageuse dans des systèmes hétérogènes dans lesquels les informations peuvent provenir et/ou être destinés à des systèmes différents. Les différences peuvent porter par exemple sur les standards de codage, sur la couche de transport lorsqu'il s'agit de transmettre des flux, sur les mécanismes d'acquittement et/ou de répétition etc. Par exemple pour offrir un service de streaming de contenu vidéo de qualité, il est très avantageux d'utiliser une diffusion en mode « unicast » si la bande passante du système de transmission le permet. Dans ce mode de diffusion, l'émetteur transmet le flux de données à destination d'un seul destinataire dont l'adresse a été enregistrée préalablement dans l'émetteur, par exemple au cours d'une phase préalable dite d'association. Le récepteur peut en outre connaitre l'adresse de l'émetteur dans le réseau pour pouvoir le cas échéant envoyer des demandes de répétitions de blocs de données exclusivement à l'émetteur concerné. Historiquement le mode de transmission « unicast » à été remplacé par le mode « multicast » dans beaucoup d'application de transmission de flux vidéo numériques pour des raisons d'efficacité dans un contexte de rareté de la bande passante. Le problème de la transmission en mode « multicast » est l'absence de mécanismes de retransmission de données erronées ce qui peut engendrer très rapidement une baisse de la qualité perçue. Avec l'arrivée de nouveaux standards de communication sans fil offrant des débits plus élevés,
il redevient possible de mettre en oeuvre dans de bonnes conditions d'exploitation, des transmissions de flux numériques en mode « unicast ». Selon les ressources disponibles, il est possible de gérer sensiblement simultanément plusieurs flux dans un mode « multi-unicast ». La plupart des services de télévision sur IP et/ou des services de vidéo à la demande (VOD) distribués en streaming livrent leurs contenus en mode multicast pour des raisons de facilité de gestion et de dimensionnement des infrastructures. En outre, les réseaux d'infrastructures étant principalement basés sur des moyens filaires, la diffusion jusqu'au point de consommation en multicast ne pose pas de problème de qualité. En revanche le passage par des moyens de diffusion internes au lieu de consommation par des moyens sans fil pour des raisons de commodité d'installation peut introduire des sources de non-qualité. Le dispositif selon l'invention intègrera avantageusement une fonction de conversion de mode multicast vers unicast dans le cadre d'une mise en oeuvre visant la fourniture d'un service de qualité. La diffusion dans le réseau local sans fil en mode « unicast » ou « multi-unicast » présente en outre l'avantage d'offrir un premier niveau de confidentialité des contenus en ce qu'en principe ils ne peuvent être reçus que par les appareils préalablement associés. Des solutions basées par exemple sur le client VLC peuvent être mises en oeuvre dans les dispositifs portables pour exploiter les flux diffusés par le dispositif. Bien entendu on ne sort pas du cadre de l'invention lorsque la, ou le cas échéant, les fonctions de conversion concernent d'autres caractéristiques telles que des formats de codage ou de transport différent. Il peut également s'agir de décrypter en totalité ou partiellement des flux entrant au sein du dispositif selon l'invention pour les rediffuser en clair ou crypté selon un autre standard par des moyens sans fils sur le lieu de consommation.

L'au moins une fonction peut être la diffusion d'un flux de données représentant un contenu télévisuel et/ou vidéo et/ou audio par l'au moins une interface de communication sans fil vers au moins un produit électronique portable. Cette fonction permet au dispositif de transmettre par ses moyens sans fil embarqués à destination d'un ou de plusieurs appareils électroniques portables, avantageusement préalablement associés au dispositif dans le cas d'une diffusion en « unicast » ou en « multi-unicast ». Un raffinement fonctionnel particulièrement avantageux consiste à détecter la déconnexion et de la reconnexion de l'appareil portable et du dispositif selon l'invention au niveau de leur interface commune 3, par exemple par détection d'un changement d'état dans les circuits assurant le transfert d'énergie ou par détection de l'état de la continuité de la transmission d'un signal entre les deux appareils.

L'au moins une fonction peut être la diffusion d'un flux de données représentant un contenu télévisuel et/ou vidéo et/ou audio par l'au moins une interface de communication sans fil vers au moins un moyen de restitution externe. Cette fonction permet au dispositif de transmettre un signal ou un flux audio et/ou vidéo vers un ou plusieurs autres moyens de restitution tels qu'un autre téléviseur, vidéo projecteur, amplificateur « home cinéma », chaine hifi, diffuseur sonore etc. Avantageusement, ce moyen pour la diffusion d'une source audio et/ou vidéo mis en oeuvre dans le dispositif selon l'invention peut être associé à des fonctions de commutation de sources internes ou externes pour offrir des combinaisons multiples de mise en relation des sources et des moyens de restitution. Il est particulièrement avantageux d'associer cette fonction à des moyens de commande à distance pour au moins certaines fonctions mises en oeuvre directement ou indirectement dans le dispositif. Bien entendu la fonction de diffusion peut s'appuyer sur et/ou se confondre avec une ou plusieurs fonctions de conversion telles que décrites précédemment.

L'au moins une fonction peut être une fonction d'enregistrement numérique d'un flux audio et/ou vidéo dans des moyens de stockage de masse compris en outre dans le dispositif ainsi que des moyens d'encodage et le cas échéant des moyens de conversion pour enregistrer un flux analogique et/ou des moyens pour sélectionner l'origine du flux à enregistrer. Il s'agit de mettre en oeuvre dans le dispositif une fonction d'enregistrement numérique. Le dispositif selon l'invention est potentiellement en situation de recevoir une pluralité de signaux analogiques et/ou de flux numériques représentant des contenus audio et/ou vidéo. Il est particulièrement avantageux de pouvoir enregistrer ces contenus au sein même du dispositif. Des moyens pour sélectionner la source à enregistrer et/ou pour programmer un enregistrement différé compléteront avantageusement cette fonction. Bien entendu dans le cas de signaux analogiques, des convertisseurs et encodeurs appropriés sont nécessaires.
Les moyens de stockage de masse seront par exemple un disque dur et/ou des mémoires à l'état solide telles que des mémoires flash, FeRAM, eeprom ou des mémoires basées sur d'autres technologies à venir.

L'au moins une fonction peut être une fonction de lecture d'un contenu numérique audio et/ou vidéo résidant dans des moyens de stockage de masse compris en outre dans le dispositif ainsi que des moyens de décodage et le cas échéant des moyens de conversion pour restituer un flux analogique et/ou des moyens pour sélectionner la destination du flux à restituer. Il s'agit de la fonction réciproque de la fonction d'enregistrement qui l'accompagne avantageusement. Cette fonction est cependant utile même si la fonction d'enregistrement de flux n'est pas mise en oeuvre dans le dispositif. En effet, il est possible de transférer des fichiers de contenus vidéo et/ou audio pour par exemple les restituer par l'intermédiaire d'un ou de plusieurs autres appareils raccordés au dispositif selon l'invention comme un téléviseur, un vidéoprojecteur, un amplificateur « home cinéma », une chaine hifi etc.
Le transfert d'au moins un fichier de contenu dans la mémoire de masse comprise dans le dispositif peut se faire avantageusement par tout moyen pour transférer des données mise en oeuvre dans le dispositif par exemple par un port USB dit « device », par un port USB dit « host », par un port USB dit « OTG », par un port Firewire (IEEE1394), par une connexion Ethernet, par les moyens sans fils radio ou infrarouge tels que Wifi ou IrDA, par une connexion directe ou indirecte à un réseau d'infrastructure par l'intermédiaire d'une liaison filaire ADSL, câble ou par fibre optique ou sans fil telle que WiMax ou HSDPA ou encore par tout autre moyen tel que les futurs successeurs de ces standards.
Des moyens complémentaires pour le décryptage et/ou pour la gestion de droits associés aux oeuvres transférées peuvent être ajoutés notamment dans le cadre d'une application à la vente ou à la location de vidéo ou de musique à la demande. Des moyens associés tels qu'un lecteur de carte à puce interne ou externe pour le décryptage et/ou pour des paiements peuvent également avantageusement compléter le dispositif selon l'invention.
Au moins un lecteur de carte à mémoire non volatile en tant que moyens pour mettre en oeuvre une fonction de lecture et/ou de sauvegarde de contenu numérique utilisant ce type de support peut être avantageux. L'abaissement des prix de vente et l'augmentation des capacités font des cartes à mémoire flash, notamment celles qui offrent des mécanismes embarqués de protection des contenus par exemple SDMI mis en oeuvre dans le standard « SD card », en font des supports appropriés pour diffuser des oeuvres musicales et/ou vidéo et/ou photo et/ou textuelles.
De même, un sous-ensemble lecteur, voir un sous-ensemble lecteur/enregistreur, de support optique tel que DVD, HD-DVD, Blue Ray peut être utilisé en tant que moyen pour mettre en oeuvre une fonction de lecture et/ou de sauvegarde de contenu numérique au sein du dispositif selon l'invention.

L'au moins une fonction peut être une fonction de synchronisation entre l'appareil électronique portable et le dispositif selon l'invention portant sur tout ou partie des contenus numériques stockés dans les moyens de stockage de masse compris en outre dans le dispositif et/ou ceux compris dans l'appareil électronique portable. On entend par synchronisation, une mise à jour automatique des contenus stockés dans l'un et/ou l'autre des moyens de stockage de masse. La synchronisation peut être à sens unique et/ou bidirectionnelle de manière globale ou selon des attributs associés aux objets numériques stockés. La synchronisation peut en outre être sélective en fonction de critères éventuellement paramétrables par l'utilisateur tels que le fait qu'un objet numérique ait déjà ou non été restitué, en fonction de la date de création du fichier dans la mémoire de masse locale etc.
La synchronisation inclut en outre le cas échéant le transfert de droits associés aux oeuvres. Ces droits peuvent faire l'objet d'une transaction automatique visant à recalculer tout ou partie des clés de cryptage et à les transférer dans l'appareil cible lorsque les droits sont associés de manière univoque à une machine donnée, seule autorisée à restituer les oeuvres.

L'au moins une fonction peut être une fonction de serveur de contenus numériques audio et/ou vidéo et/ou image. Cette variante de mise en oeuvre du dispositif inclut une fonction de serveur audio et/ou vidéo apte à proposer au choix de l'utilisateur et à lui délivrer des contenus audio et/ou vidéo. La fonction de serveur est avantageusement agencée pour pouvoir proposer et délivrer des contenus sur des moyens de restitution connectables directement au dispositif en point à point par des moyens filaires ou des moyens sans fils. Encore plus avantageusement, les moyens de restitution seront connectables à un réseau local dont fait partie le dispositif selon l'invention et/ou à distance sur des moyens de restitution connectés à un réseau d'infrastructure auquel est également raccordé le dispositif selon l'invention de manière directe ou indirecte. Dans certaines variantes de mise en oeuvre, les moyens de restitution pourront être par exemple un ou plusieurs lecteurs multimédia portables, un ou plusieurs téléviseurs, vidéoprojecteurs, amplificateur « home cinéma », chaîne hifi, diffuseur sonore etc. Ces appareils pouvant le cas échéant nécessiter une interface d'adaptation. On entend par réseaux d'infrastructure des accès à Internet possiblement par l'intermédiaire de tout support physique filaire ou sans fil ou encore des infrastructures de réseaux de type téléphonique sans fil dits de troisième, de quatrième génération et suivantes. Un cas d'utilisation du dispositif qui est particulièrement spectaculaire consiste à consulter, sélectionner et restituer à distance les contenus numériques de son serveur domestique possiblement inclus dans le dispositif selon l'invention, en « streaming », sur un lecteur multimédia portable équipé de moyens de connexion sans fil à Internet par exemple par wifi. Ce cas d'utilisation peut s'envisager en situation de mobilité, il suffit alors de se trouver dans une zone « hot spot ». Ce cas de mise en oeuvre de l'invention peut aussi par exemple s'envisager en hôtellerie ou les chambres peuvent être pré équipées d'un dispositif selon l'invention raccordé d'une part au téléviseur et d'autre part à un accès réseau. Le client équipé d'un terminal compatible avec le dispositif selon l'invention peut alors retrouver son environnement personnel habituel, musicothèque, vidéothèque et photothèque.

A l'inverse, l'invention permet de transférer des contenus numériques depuis une source distante dans les moyens mettant en oeuvre la fonction collecteur de contenus numériques du dispositif selon l'invention. Un exemple de source distante peut être un autre lecteur/enregistreur multimédia portable incorporant éventuellement une fonction caméra ou appareil photo. Il peut s'agir également par exemple d'une caméra vidéo ou d'un appareil photo numérique doté en natif ou par le biais d'un accessoire d'une connectivité sans fil telle que par Wifi. Ces appareils intègrent généralement en outre une capacité de stockage local utilisé comme mémoire tampon pour permettre d'acquérir des images en mode déconnecté puis pour les transférer dans les moyens de stockage du dispositif selon l'invention, par exemple dès qu'une connexion à un réseau est possible et/ou lorsque la mémoire tampon est saturée et/ou sur commande de l'utilisateur.

Système pour diffuser des programmes de télévision ou des contenus numériques au sein d'un local ou d'un moyen de transport comprenant :
- un dispositif tel que décrit précédemment, le dispositif étant agencé pour diffuser un flux numérique par l'intermédiaire d'une interface de communication sans fil
- un appareil électronique portable agencé pour :

- recevoir le flux d'information numérique diffusé par le dispositif,
- décoder l'information reçue et le cas échéant la décrypter,
- restituer l'image et/ou le son du programme de télévision ou du contenu numérique reçu par des moyens embarqués dans, ou connectés à, l'appareil électronique portable.

Il s'agit par exemple de diffuser, dans un local domestique ou professionnel ou encore dans un moyen de transport, des programmes de télévision ou des contenus numériques sous forme de flux, en « streaming » à partir de l'interface de communication sans fils du dispositif selon l'invention. Dans cette variante de mise en oeuvre, le ou les équipements destinataires sont des appareils électroniques portables.
Lesdits programmes ou contenus peuvent provenir des ressources internes du dispositif, par exemple s'il embarque une fonction lecteur d'une mémoire de masse fixe et/ou amovible et/ou d'un support optique. Lesdits contenus peuvent provenir desdits autres appareils pouvant être connectés au dispositif par des interfaces standard appropriées. Lorsque ces sources sont de nature analogique, la conversion analogique numérique appropriée ainsi que l'encodage sous la forme d'un flux numérique diffusable par les moyens sans fil du dispositif font partie de l'au moins une fonction du dispositif selon l'invention. Avantageusement, une voie de retour du système de communication sans fil permettra à l'appareil électronique portable de commander au moins certaines fonctionnalités du dispositif selon l'invention. Parmi ces fonctionnalités, il y a notamment par exemple la sélection d'un contenu numérique ou de la source d'un flux ainsi que des commandes permettant de démarrer et d'arrêter la diffusion. Peuvent s'y ajouter avantageusement par exemple, les fonctionnalités classiques d'un lecteur audio et/ou vidéo que sont l'avance rapide dans un sens et/ou dans l'autre, avance rapide éventuellement à plusieurs niveaux par exemple X2, X4, X16. L'interface utilisateur de l'appareil électronique portable, pouvant comprendre un clavier et/ou un écran tactile, est normalement utilisée en usage autonome pour commander les moyens de lecture des contenus stocké dans sa mémoire. Avantageusement, cette même interface utilisateur sera réaffectée vers les moyens utilisés pour la restitution d'un flux numérique reçu en « streaming ». Cette réaffectation nécessite l'envoi de commandes au dispositif diffuseur par une voie de retour qui est avantageusement comprise dans l'interface de communication sans fil sur laquelle repose la diffusion bien qu'une voie de retour utilisant des moyens distincts soit possible.

Dans le cas de la mise en oeuvre avantageuse d'une diffusion en mode « unicast », une association préalable entre l'appareil portable communicant et le dispositif selon l'invention sera nécessaire pour que chaque point fasse connaitre à l'autre son adresse. Des moyens seront mis en oeuvre dans l'appareil portable sous la forme par exemple d'une commande dans un menu d'installation pour participer à la procédure d'association avec le dispositif.

Selon un autre aspect de l'invention, il est proposé un système pour diffuser des programmes de télévision ou des contenus numériques au sein d'un local ou d'un moyen de transport comprenant :
- un dispositif selon l'invention tel que décrit précédemment, le dispositif étant agencé pour diffuser un flux numérique par l'intermédiaire d'une interface de communication sans fil,
- au moins un autre appareil électronique raccordable par au moins une interface standard pour restituer une image vidéo et/ou le son associé,
- une interface de réception raccordée à l'au moins un autre appareil électronique standard pour restituer une image vidéo et le son associé, l'interface de réception étant agencée pour :

- recevoir le flux d'information numérique diffusé par le dispositif,
- décoder l'information reçue et le cas échéant la décrypter,
- restituer l'image et le son du programme de télévision ou du contenu numérique reçu par l'intermédiaire de l'au moins un autre appareil électronique standard pour restituer une image vidéo et/ou le son associé qui lui est raccordé.

Il s'agit d'une variante de mise en oeuvre dans laquelle la réception des programmes de télévision ou des contenus numériques se fait au moyen d'une interface de réception raccordée à l'au moins un autre appareil électronique standard pour restituer une image vidéo et le son associé.
Dans un mode de réalisation particulièrement avantageux, le même dispositif selon l'invention peut être utilisé indifféremment en tant que point de diffusion et interface de réception. En effet, l'utilisation du même type de dispositif tant en diffusion qu'en réception de contenu offre de nombreux avantages tant pour le fabricant que pour les utilisateurs. Le fabriquant limite le nombre nécessaire de produits à concevoir, à fabriquer et à commercialiser pour répondre à la plupart des besoins de ses clients notamment en matière de fonctionnalités et de types d'interfaces pour raccorder d'autres appareils électroniques. L'utilisateur a l'avantage de pourvoir poser et/ou de pouvoir recharger son ou ses appareils électroniques portables en plusieurs endroits du local, il n'a qu'un seul mode opératoire à connaitre et surtout il peut potentiellement partager des contenus dont l'origine et/ou la destination ne sont pas imposées par des choix d'installation fixant une fois pour toute l'endroit où se trouve le diffuseur et le ou les points de réception. Le dispositif selon l'invention dans son mode de réalisation préféré, comprend les ressources nécessaires pour fonctionner selon les deux usages diffusion et réception. Ces ressources sont par exemple des moyens d'émission et de réception sans fil pour transmettre les contenus, des moyens d'encodage et de décodage, des moyens de conversion en entrée et en sortie, des moyens de commutation d'entrées et de sorties, des moyens pour recevoir un signal de télécommande par infrarouge et des moyens pour interpréter et/ou retransmettre des signaux infrarouges vers lesdits autres appareils électroniques. Une phase préalable d'association des dispositifs selon l'invention susceptible d'échanger des contenus permet de définir un réseau local sans fil de partage de contenus numériques. Cette opération peut se faire par appui sur un bouton poussoir d'association agencé pour éviter les appuis involontaires. L'association peut aussi reposer sur une action à partir de la télécommande et impliquer ou non un écran.
Il s'agit par exemple d'exploiter les contenus sur un ou plusieurs moyens de restitution tels qu'un téléviseur, un vidéo projecteur, une chaine hifi ou en ensemble « home cinéma », distants du dispositif diffusant le contenu par ses moyens sans fil au sein du local. L'interface de réception intégrera avantageusement un récepteur de télécommande infrarouge et aura accès à une voie de retour dans le système de transmission sans fil pour que l'utilisateur puisse commander au moins certaines fonctionnalités du dispositif selon l'invention comme dans l'exemple décrit précédemment.

On peut aussi prévoir un système pour diffuser des programmes de télévision ou des contenus numériques au sein d'un local ou d'un moyen de transport tel que décrit précédemment comprenant en outre une connexion directe ou indirecte à un réseau d'infrastructure à haut débit pour y acquérir des flux de programmes de télévision et/ou des contenus vidéo et/ou musicaux.
Il peut s'agir de contenus provenant d'une base de données distante par l'intermédiaire d'une connexion directe ou indirecte à Internet à haut débit. On entend par connexion directe une connexion utilisant des moyens de connexion à un réseau d'infrastructure embarqués dans le dispositif selon l'invention par exemple un modem ADSL pour paire téléphonique, un modem pour câble coaxial ou pour fibre optique ou encore par l'intégration d'une interface avec un réseau d'infrastructure sans fil à haut débit. On entend par connexion indirecte du dispositif au réseau d'infrastructure une connexion par l'intermédiaire d'un appareil externe à l'invention tel qu'un modem ou un modem routeur au quel le dispositif est connecté par une liaison point à point, par exemple Ethernet ou USB ou par l'intermédiaire d'un réseau local.

D'autres avantages et caractéristiques de l'invention apparaîtront à l'examen de la description détaillée d'un mode de mise en oeuvre nullement limitatif, et des dessins annexés sur lesquels :
- la figure 1 illustre le dispositif selon l'invention dans un environnement représentatif impliquant un appareil électronique portable 2 et d'autres appareils électroniques;
- la figure 2 illustre les moyens mis en oeuvre pour la fonction lecteur/enregistreur multimédia numérique;
- la figure 3 illustre une première variante du système selon l'invention dans un environnement représentatif de son utilisation ;
- la figure 4 illustre une seconde variante du système selon l'invention dans un environnement représentatif de son utilisation ;
- la figure 5 illustre une troisième variante du système selon l'invention dans un environnement représentatif de son utilisation ;
- la figure 6 illustre une quatrième variante du système selon l'invention dans un environnement représentatif de son utilisation.

### Description détaillée des figures

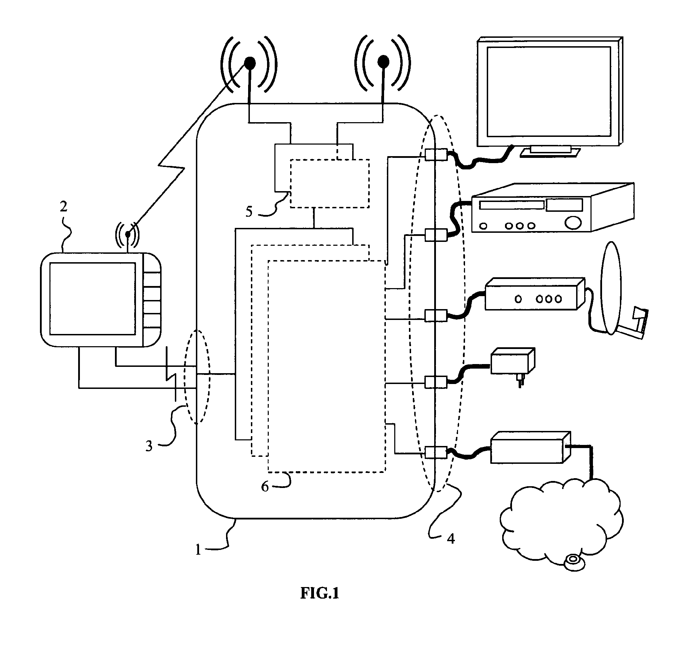

**La** **figure 1** illustre le dispositif selon l'invention 1 pour connecter un appareil électronique portable 2 à d'autres appareils électroniques. Le dispositif 1 comprend des moyens pour transférer de l'énergie à l'appareil électronique portable et des moyens pour établir la continuité d'au moins un signal entre l'appareil électronique portable et le dispositif. Dans cette représentation, ces moyens sont combinés dans une interface commune 3. Il est à noter que l'interface 3 peut être matérialisée par l'utilisation d'un port d'entrée/sortie numérique standard offrant une capacité pour le dispositif à transférer de l'énergie à l'appareil portable et des capacités de transmission ayant un débit suffisant pour par exemple transporter un flux vidéo. Une liaison par des ports USB2 ou Firewire (IEEE1394) à 6 fils par exemple peut convenir. Le port de type « host » étant du côté du dispositif selon l'invention et le port correspondant du type « device » étant du côté de l'appareil portable.
Le dispositif comprend en outre au moins une interface 4 pour établir la continuité d'au moins un signal avec au moins un autre appareil électronique. Le dispositif comprend au moins une interface de communication sans fil 5 illustré dans cet exemple non limitatif par un sous-ensemble de transmission radio exploitant une diversité d'antennes.
Tous les moyens pour établir la continuité d'un signal avec l'appareil électronique portable et l'au moins autre appareil électronique sont désolidarisables au moins à l'une de leur extrémité. Ces moyens désolidarisables peuvent être relativement rigides et au moins en partie solidaire des parois des appareils concernés comme illustrés par l'interface 4. Ces moyens pourraient aussi faire appel à des solutions souples par exemple utilisant un ou plusieurs câbles équipés d'un ou de plusieurs connecteurs à l'une ou aux deux extrémités. L'interface 4 illustre l'interface du dispositif selon l'invention avec les appareils extérieurs. Pour cette interface des solutions de raccordement plus ou moins rigides sont envisageables. La solution préférée de mise en oeuvre repose sur des câbles équipés des connecteurs standards appropriés se raccordant de manière désolidarisable à des embases solidaires de la paroi du dispositif. Généralement ces câbles sont également désolidarisables du côté de l'interface avec lesdits autres appareils électroniques sauf en ce qui concerne l'alimentation secteur.

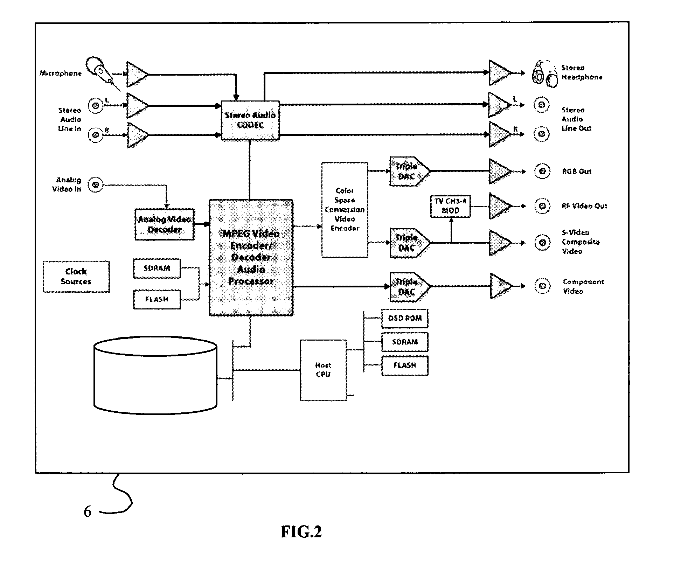

**La** **figure 2** illustre un exemple non limitatif de moyens 6 mis en oeuvre dans le dispositif selon l'invention pour matérialiser une fonction d'enregistrement et de reproduction de contenus multimédia stockés sous forme numériques et incluant les codeurs et décodeurs pour acquérir et restituer des signaux analogiques.

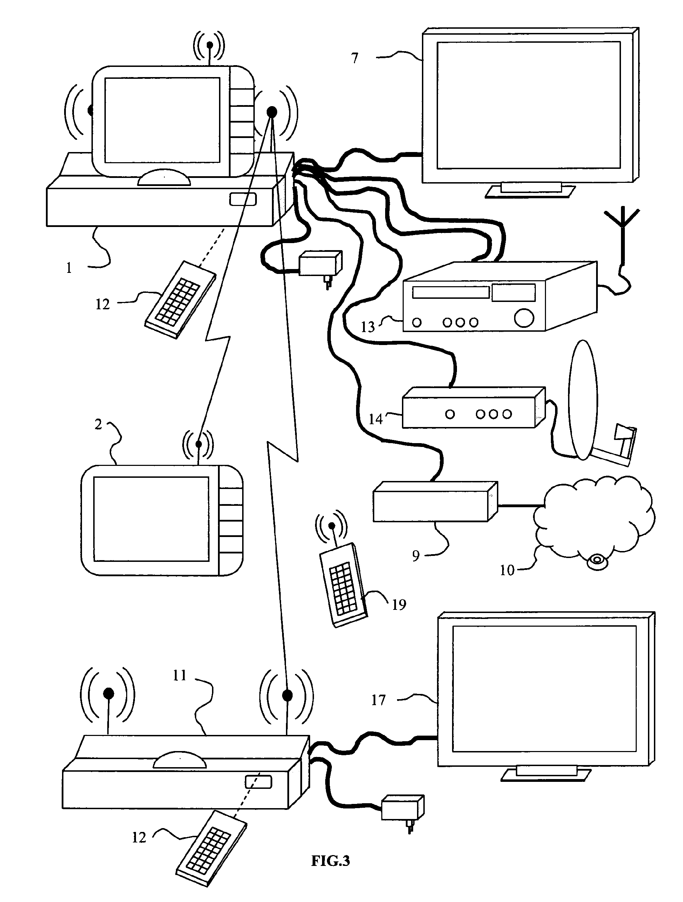

En référence à la **figure 3** illustrant un exemple non limitatif d'utilisation, un dispositif selon l'invention est installé dans le salon d'un lieu d'habitation. Le dispositif 1 est avantageusement connecté à toutes les sources potentielles de contenus vidéo et/ou musicaux ainsi qu'aux moyens de restitution de ces contenus 7, 13. Toute source de contenu peut être raccordée comme par exemple un lecteur de CD et/ou de DVD et/ou de HD-DVD et/ou de Blue Ray, un démodulateur récepteur de programmes diffusés par satellite 14, un récepteur DVB-T et/ou DVB-H et/ou DVB-S, un tuner radio FM analogique 13, numérique par exemple DAB avec services enrichis tel que DMB ou DAB/IP. Une liaison avec un réseau d'infrastructure 10 à large bande, par exemple au moyen d'un modem ADSL 9, est également prévue pour accéder à des contenus numériques par l'intermédiaire d'un navigateur générique Internet ou d'interfaces applicatives dédiées accédant directement à leurs serveurs dès qu'elles sont connectées au réseau. Cette figure illustre le fait que le dispositif 1 est en outre capable de diffuser des flux numériques représentant une chaine de télévision, de la vidéo achetée ou louée à la demande par l'intermédiaire d'un support physique ou par l'intermédiaire de services en lignes accessibles par la connexion à un réseau d'infrastructure. Il peut s'agir également de vidéo ou de musique enregistrée par l'utilisateur par des moyens embarqués dans un lecteur/enregistreur multimédia portable 2 connecté au dispositif 1 ou encore par des moyens embarqués dans le dispositif selon l'invention 1 pour mettre en oeuvre une fonction d'enregistrement numérique. Parmi les informations numériques diffusées par le dispositif selon l'invention aux appareils capables de les exploiter, après une possible phase initiale d'association, il y a des informations invitant l'utilisateur à faire un choix. Il peut s'agir par exemple du choix de la source du flux numérique diffusé, lorsque cette source propose une pluralité de programmes comme par exemple une source de programmes de télévision ou de radio, ces choix seront avantageusement proposés à l'utilisateur. Les choix de programmes de télévision et/ou de radio pourront avantageusement être proposés sous la forme de grilles des programmes pour faciliter la navigation et la sélection dans l'espace des choix possibles.
En effet, au-delà des chaines traditionnelles régionales et nationales s'ouvre la possibilité d'une offre mondiale de contenus accessibles par la connexion au réseau d'infrastructure. Certains choix peuvent être conditionnels, par exemple être assujettis à une transaction économique à l'acte ou à un abonnement auprès d'un détenteur de droits ou d'un fournisseur de contenus. Les choix de l'utilisateur peuvent se faire à partir d'une télécommande 12 en relation ou non avec une proposition affichée sur un écran. Lorsque le contenu diffusé est reçu et exploité sur un appareil multimédia portable, l'interface utilisateur « normale » de ce dernier peut être mise à profit pour visualiser et sélectionner les choix ainsi que les commandes liées à l'exploitation des contenus. Cette figure illustre également qu'outre les diffusions du dispositif 1 destinée à un ou plusieurs appareil électronique portable 2 au sein du local ou du moyen de transport, le système selon l'invention est prévu pour aussi diffuser des contenus numériques à destination d'autres appareils de restitution fixes 17. Ces appareils équipés d'interfaces standards numériques et/ou analogiques restituent l'image et le son reçu et décodé au moyen d'un adaptateur compatible avec les moyens utilisés pour la diffusion. De manière particulièrement avantageuse, l'adaptateur pour recevoir et décoder le flux est un autre dispositif selon l'invention 11 configuré pour fonctionner en récepteur. Il est également possible de spécialiser les dispositifs selon l'invention pour être dédiés à la diffusion ou à la réception tout en gardant des sous ensembles communs comme le boîtier et les interfaces. Dans ce cas, la spécialisation est matérialisée par un choix différencié des moyens pour mettre en oeuvre l'au moins une fonction. Il est particulièrement avantageux pour l'utilisateur d'avoir plusieurs dispositifs offrant une interface 3 dans des endroits différents. Ces dispositifs constituent autant de lieux où un appareil portable utilisable en mobilité dans le local peut être déposé sur un support adapté et en capacité de maintenir à l'état chargé toujours prêt à l'emploi les moyens de stockage d'énergie des appareils portables.

Bien entendu, on reste dans le cadre de l'invention si les appareils pour restituer les contenus intègrent par construction des moyens pour recevoir et décoder les flux diffusés. Il peut s'agir par exemple de téléviseurs équipés de manière native d'un « tuner de TV/IP par Wifi ». Le confort d'utilisation du système est grandement amélioré par l'utilisation de télécommandes locales, proches du lieu de restitution utilisant des signaux infrarouges pour communiquer directement avec le dispositif diffuseur 1 ou indirectement via les adaptateurs de réception qui traduisent et renvoient les commandes infrarouge reçues par une voie de retour de l'interface de communication sans fil vers le dispositif diffuseur.
Il est possible aussi d'utiliser des télécommandes radio spécialisées 19, capables de communiquer directement avec le dispositif diffuseur à travers un certain nombre de murs et de plafonds. Il est à noter qu'on ne sort pas du cadre de l'invention si le système est utilisé pour diffuser non pas un flux de données pour une exploitation « au fil de l'eau » en « streaming » mais un flux de données représentant un transfert de contenu d'un lieu de stockage à un autre. Il est également possible d'effectuer sensiblement simultanément les deux types d'exploitation d'un flux de données multimédia par une visualisation en mode de chargement progressif. Ce mode est possible de manière satisfaisante, c'est-à-dire sans constatation d'interruptions de service, à condition que le débit du chargement soit supérieur au débit nécessaire à la lecture du contenu.

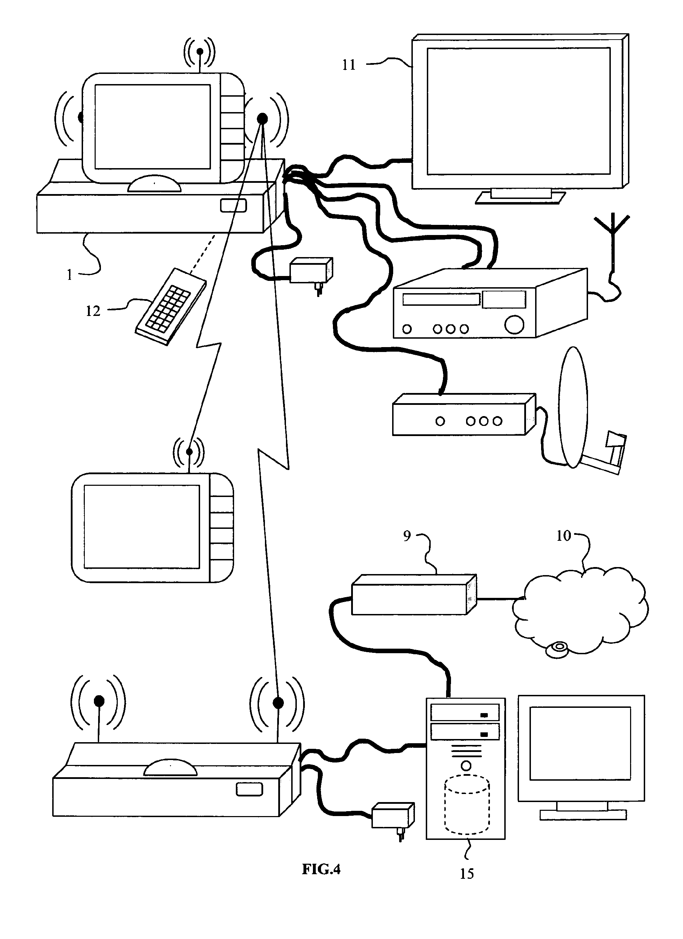

**La** **figure 4** illustre le système selon l'invention dans un contexte d'utilisation représentatif. Dans cet exemple non limitatif d'utilisation, un dispositif selon l'invention est installé dans le salon d'un lieu d'habitation comme dans l'exemple illustré par la figure précédente. Cet exemple illustre l'intérêt qu'il y a à utiliser des dispositifs portables selon l'invention dont les fonctions mises en oeuvre permettent un fonctionnement en diffuseur de flux de contenus ou en adaptateur récepteur décodeur selon les besoins. Avantageusement le dispositif pourra fonctionner en diffuseur et en récepteur décodeur simultanément, au moins pour certaines sources dont le format des données intègre les éléments d'une couche de transport ou ne nécessite qu'un traitement et des moyens limités pour en assurer la diffusion ou la réception. Dans cet exemple, un dispositif selon l'invention 1 assure à cette occasion la diffusion d'un contenu stocké dans la mémoire d'un ordinateur 15 ou arrivant sous la forme d'un premier flux par un accès au réseau d'infrastructure offrant une connexion à Internet. Le contenu est diffusé dans le local par le dispositif 1 et est reçu par un second dispositif selon l'invention qui par exemple restitue l'image et le son de ce contenu sur le téléviseur distant. Le dispositif est en outre capable si nécessaire de diffuser vers le terminal portable 2 un autre contenu venant d'une autre source ou encore de rediffuser le même contenu. La rediffusion du même contenu en mode « multicast » peut se faire en utilisant une fonction de répéteur.

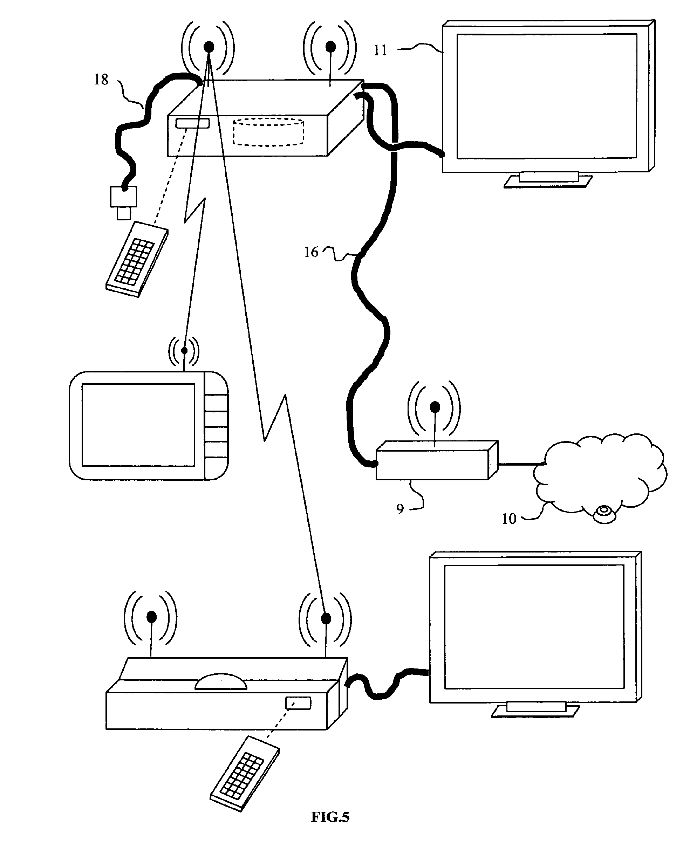

**La** **figure 5** illustre de manière non limitative un système où le dispositif selon l'invention prend la forme d'un lecteur-enregistreur numérique de salon. Dans cet exemple, l'interface 3 assurant la continuité de signaux avec, et le transfert d'énergie vers, un appareil électronique portable est un câble 18 assurant la liaison entre des ports USB. Une connexion entre le dispositif selon l'invention et un réseau d'infrastructure est réalisée au moyen d'un modem ADSL. Cette connexion peut être matérialisée par une liaison filaire 16, par exemple Ethernet ou USB ou encore cette liaison peut mettre en oeuvre des moyens de transmission sans fil si le modem est équipé d'une interface de communication sans fil offrant un débit suffisant pour transmettre des flux vidéo, voir des flux vidéo en haute définition.

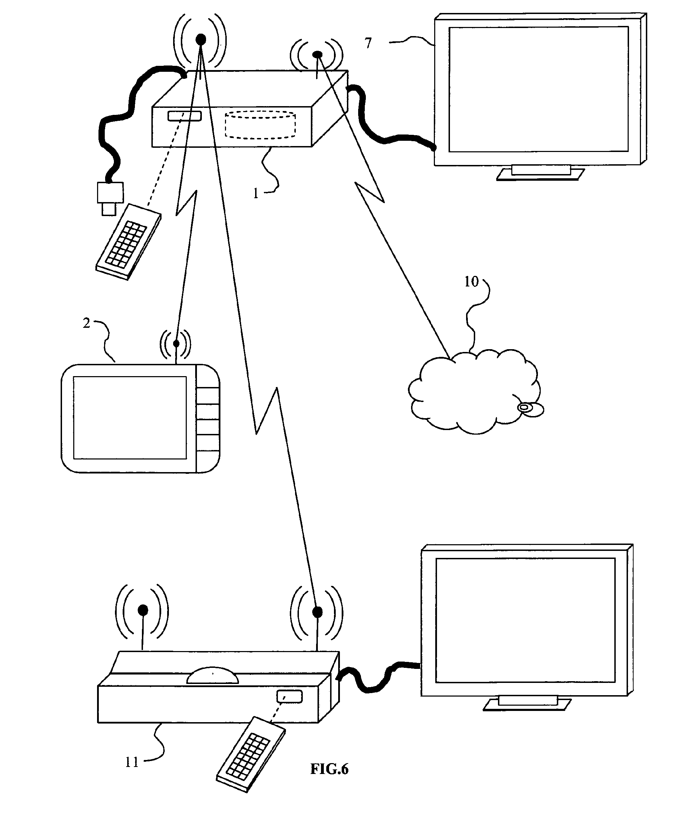

**La** **figure 6** illustre un système selon l'invention qui diffère du précédent en ce que le dispositif selon l'invention met en oeuvre une fonction de passerelle entre un réseau d'infrastructure sans fil à haut débit 10 tel que WiMax et un réseau local sans fil tel qu'une variante rapide et qualitative de Wifi telle que par exemple 802.11n. Ainsi le dispositif selon l'invention peut accéder de manière autonome à des services nécessitant un accès à Internet. Le dispositif selon l'invention dans cette variante peut avantageusement être déployé par des opérateurs de services ou de réseau ou encore des fournisseurs d'accès Internet dans le cadre d'offres à haute valeur ajoutée.

Bien entendu, les moyens mis en oeuvre dans l'invention, notamment lorsqu'une connexion à Internet est effective, peuvent aussi être utilisés aussi dans le cadre d'applications standards du type navigation sur le WWW, achats en ligne, courrier électronique etc.

Bien sûr, l'invention n'est pas limitée aux exemples qui viennent d'être décrits, de nombreux aménagements peuvent y être apportés, d'autres choix de combinaisons de caractéristiques et/ou de mise en oeuvre peuvent être faits sans sortir du cadre de l'invention. En outre, les exemples de solutions ou de standards techniques cités sont ceux qui sont en vigueur au moment du dépôt de la demande brevet. Ils sont susceptibles de disparaitre ou d'être rapidement remplacés par d'autres sans pour autant rendre obsolète l'invention elle même.

## Revendications

1. Dispositif (1) pour connecter un appareil électronique portable (2), capable de stocker des contenus numériques dans une mémoire et de lire et/ou d'enregistrer de la vidéo, à au moins un autre appareil électronique, le dispositif comportant :
- une interface (3) pour établir la continuité d'au moins un signal entre ledit dispositif et l'appareil électronique portable (2) et/ou pour transférer de l'énergie à l'appareil électronique portable (2), et
- au moins une interface (4) pour établir la continuité d'au moins un signal entre ledit dispositif (1) et l'au moins un autre appareil électronique (2), et
- au moins une interface (5) de communication sans fil, et
- des moyens (6) pour mettre en oeuvre au moins une fonction impliquant tout ou partie des ressources mises en oeuvre dans ledit dispositif.

2. Dispositif selon la revendication 1, **caractérisé en ce qu'**il comporte une interface pour transférer de l'énergie audit appareil électronique portable, ladite interface mettant en oeuvre la continuité d'au moins un circuit électrique par l'intermédiaire de moyens désolidarisables.

3. Dispositif selon l'une la revendication 1, **caractérisé en ce qu'**il comporte une interface pour transférer de l'énergie audit appareil électronique portable par couplage inductif.

4. Dispositif selon l'une quelconque des revendications précédentes, **caractérisé en ce qu'**il comporte une interface pour établir la continuité d'au moins un signal entre ledit dispositif et l'appareil électronique portable reposent sur la continuité d'au moins un circuit électrique par l'intermédiaire de moyens désolidarisables.

5. Dispositif selon l'une quelconque des revendications précédentes, **caractérisé en ce qu'**il comporte une interface pour établir la continuité d'au moins un signal entre ledit dispositif et l'appareil électronique portable, mettant en oeuvre la continuité d'au moins un circuit optique par l'intermédiaire de moyens désolidarisables.

6. Dispositif selon l'une quelconque des revendications précédentes, **caractérisé en ce qu'**il comporte une interface pour établir la continuité d'au moins un signal entre ledit dispositif et l'appareil électronique portable par couplage inductif.

7. Dispositif selon la revendication précédente, dans lequel l'interface pour établir la continuité d'au moins un signal entre ledit dispositif et l'appareil électronique portable utilise les mêmes inducteurs que pour transférer de l'énergie.

8. Dispositif selon l'une quelconque des revendications précédentes, **caractérisé en ce qu'**il comporte une interface pour établir la continuité d'au moins un signal entre ledit dispositif et l'appareil électronique portable, mettant en oeuvre un couplage capacitif.

9. Dispositif selon l'une quelconque des revendications précédentes, **caractérisé en ce qu'**il comporte une interface pour établir la continuité d'au moins un signal entre ledit dispositif et l'appareil électronique portable, mettant en oeuvre une liaison radiofréquence à micro puissance.

10. Dispositif selon l'une quelconque des revendications précédentes, **caractérisé en ce qu'**il comporte une interface pour établir la continuité d'au moins un signal entre ledit dispositif et l'au moins un autre appareil électronique, ladite interface reposant sur la continuité d'au moins un circuit électrique par l'intermédiaire de moyens désolidarisables.

11. Dispositif selon l'une quelconque des revendications précédentes, **caractérisé en ce qu'**il comporte une interface pour établir la continuité d'au moins un signal entre ledit dispositif et l'au moins un autre appareil électronique, ladite interface reposant sur la continuité d'au moins une liaison optique en mode guidé par au moins un circuit optique raccordé par l'intermédiaire de moyens désolidarisables et/ou en mode rayonné.

12. Dispositif selon l'une quelconque des revendications 4, 5, 9, 10 ou 11, dans lequel les moyens désolidarisables sont en tout ou partie attachés d'une manière sensiblement rigide à une paroi du dispositif.

13. Dispositif selon l'une quelconque des revendications 4, 5, 9, 10 ou 11, dans lequel les moyens désolidarisables sont en tout ou partie attachés par des moyens souples, éventuellement détachables, au dispositif.

14. Dispositif selon l'une quelconque des revendications précédentes, **caractérisé en que** l'au moins une fonction comprend une mise en continuité directe ou indirecte d'au moins un circuit électrique de l'appareil électronique portable avec un circuit électrique de l'au moins un autre appareil électronique.

15. Dispositif selon l'une quelconque des revendications précédentes, **caractérisé en que** l'au moins une fonction comprend une mise en continuité directe ou indirecte d'au moins un circuit électrique de l'appareil électronique portable avec l'au moins une interface de communication sans fil.

16. Dispositif selon l'une quelconque des revendications précédentes, **caractérisé en que** l'au moins une fonction comprend une mise en continuité directe ou indirecte d'au moins un circuit électrique de l'au moins un autre appareil électronique avec l'au moins une interface de communication sans fil.

17. Dispositif selon l'une quelconque des revendications précédentes, **caractérisé en que** l'au moins une fonction comprend une mise en continuité directe ou indirecte d'au moins une entrée avec une sortie sensiblement de même nature dans des conditions déterminées.

18. Dispositif selon l'une quelconque des revendications précédentes, **caractérisé en que** l'au moins une fonction comprend un point d'accès dans un réseau de communication sans fil.

19. Dispositif selon l'une quelconque des revendications précédentes, **caractérisé en que** l'au moins une fonction comprend une passerelle entre ledit réseau de communication sans fil et un réseau local utilisant des moyens filaires.

20. Dispositif selon l'une quelconque des revendications précédentes, **caractérisé en que** l'au moins une fonction comprend une passerelle entre ledit réseau de communication sans fil et un réseau d'infrastructure utilisant des moyens filaires.

21. Dispositif selon l'une quelconque des revendications précédentes, **caractérisé en que** l'au moins une fonction comprend une passerelle entre ledit réseau de communication sans fil et un réseau d'infrastructure utilisant d'autres moyens sans fil.

22. Dispositif selon l'une quelconque des revendications précédentes, **caractérisé en que** l'au moins une fonction comprend un répéteur pour étendre la portée d'un autre réseau de communication sans fil.

23. Dispositif selon l'une quelconque des revendications précédentes, **caractérisé en que** l'au moins une fonction comprend une conversion d'un premier flux de données reçu provenant d'une source de contenu externe en au moins un second flux de données destiné spécifiquement à un appareil électronique portable préalablement associé au dispositif selon l'invention.

24. Dispositif selon l'une quelconque des revendications précédentes, **caractérisé en qu'**au moins une fonction comprend la diffusion d'un flux de données représentant un contenu télévisuel et/ou vidéo et/ou audio par l'au moins une interface de communication sans fil vers au moins un produit électronique portable.

25. Dispositif selon l'une quelconque des revendications précédentes, **caractérisé en que** l'au moins une fonction comprend une fonction de lecture d'un contenu numérique audio et/ou vidéo résidant dans des moyens de stockage de masse compris en outre dans le dispositif ainsi que des moyens de décodage et le cas échéant des moyens de conversion pour restituer un flux analogique et/ou des moyens pour sélectionner la destination du flux à restituer.

26. Dispositif selon l'une quelconque des revendications précédentes, **caractérisé en que** l'au moins une fonction comprend une fonction de synchronisation entre l'appareil électronique portable et le dispositif selon l'invention portant sur tout ou partie des contenus numériques stockés dans les moyens de stockage de masse compris en outre dans le dispositif et/ou ceux compris dans l'appareil électronique portable.

27. Dispositif selon l'une quelconque des revendications précédentes, **caractérisé en que** l'au moins une fonction comprend une fonction de serveur de contenus numériques audio et/ou vidéo et/ou photos.

28. Dispositif selon l'une quelconque des revendications précédentes, **caractérisé en que** l'au moins une fonction comprend une fonction de collecteur de contenus numériques audio et/ou vidéo et/ou photos.

29. Système pour diffuser des programmes de télévision ou des contenus numériques au sein d'un local ou d'un moyen de transport comprenant :
- un dispositif selon l'une quelconque des revendications précédentes, agencé pour diffuser un flux numérique par l'intermédiaire d'une interface de communication sans fil, et
- un appareil électronique portable agencé pour :
- recevoir le flux d'information numérique diffusé par le dispositif,
- décoder l'information reçue et le cas échéant la décrypter,
- restituer l'image et/ou le son du programme de télévision ou du contenu numérique reçu par des moyens embarqués dans, ou connectés à, l'appareil électronique portable.

30. Système pour diffuser des programmes de télévision ou des contenus numériques au sein d'un local ou d'un moyen de transport comprenant :
- un dispositif selon l'une quelconque des revendications de 1 à 28, agencé pour diffuser un flux numérique par l'intermédiaire d'une interface de communication sans fil,
- au moins un autre appareil électronique raccordable par au moins une interface standard pour restituer une image vidéo et/ou le son associé,
- une interface de réception raccordée à l'au moins un autre appareil électronique standard pour restituer une image vidéo et le son associé, l'interface de réception étant agencée pour :
- recevoir le flux d'information numérique diffusé par le dispositif,
- décoder l'information reçue et le cas échéant la décrypter,
- restituer l'image et le son du programme de télévision ou du contenu numérique reçu par l'intermédiaire de l'au moins un autre appareil électronique standard pour restituer une image vidéo et/ou le son associé qui lui est raccordé.

31. Système selon l'une des revendications 29 ou 30, comprenant en outre une connexion directe ou indirecte à un réseau d'infrastructure à haut débit pour y acquérir des flux de programmes de télévision et/ou des contenus vidéo et/ou musicaux.
